# EUROPEAN PATENT SPECIFICATION

(11) **EP 2 027 555 B1**
(45) Date of publication and mention of the grant of the patent: **22.03.2017**
(21) Application number: 07744091.5
(22) Date of filing: 18.05.2007
(51) Int. Cl.: H04L 29/06, G06F 21/00, G06F 21/60, G06F 21/62, H04N 1/32, H04N 1/44

(54) **INFORMATION PROCESSING APPARATUS,INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF, PROCÉDÉ ET PROGRAMME DE TRAITEMENT DE L'INFORMATION

(30) Priority: 22.05.2006 JP 2006141849
(43) Date of publication of application: 25.02.2009
(73) Proprietor: Canon Kabushiki Kaisha, Ohta-ku, Tokyo 146-8501 (JP)
(72) Inventor: UCHIKAWA, Hiroshi c/o CANON KABUSHIKI KAISHA, Ohta-ku, Tokyo 146-8501 (JP)
(74) Representative: TBK
(86) International application number: PCT/JP2007/060657
(87) International publication number: WO 2007/136118

(56) References cited:
- EP-A1- 1 571 556
- EP-A2- 1 316 900
- WO-A1-2004/102459
- JP-A- 2002 055 868
- JP-A- 2003 271 437
- JP-A- 2005 149 088
- JP-A- 2005 258 503
- JP-A- 2006 099 272
- US-A1- 2006 095 382
- SAFAVI-NAINI REIHANEH ET AL: "Import/Export in digital rights management", ACM WORKSHOP ON DIGITAL RIGHTS MANAGEMENT, 25 October 2004 (2004-10-25), pages 99-110, XP002414309,

## Description

### Technical Field

The present invention relates to an information processing apparatus, an information processing method, and information processing program, and more particularly to reception/transfer processing of electronic data with access authority in an information processing apparatus.

### Background Art

An information processing apparatus has conventionally been known, which is capable of receiving electronic data such as an electronic document attached with an access authority and transferring the received electronic document in a state that it remains attached with the access authority. In particular, an access authority management system for electronic documents has recently been developed in order to prevent leakage of information.

Such access authority management system has functions, for example, of permitting only authorized users to peruse, edit, and print an electronic document and prohibiting perusal of an electronic document after passage of the expiration date set on the electronic document itself. For access authority management in the access authority management system, a desired policy is generally selectively applied to an electronic document at the time of creation of the electronic document.

By way of example, there is known Policy Server manufactured at Adobe corporation ("Adobe Live Cycle Policy Server" searched on February 27, 2006 on the Internet (URL: http://www.adobe.co.jp/products/server/policy/main.html). The Policy Server is capable of performing the above described access authority control on PDF (portable document format) files.

As a method for evaluating access control of data of the above kind, there is known a method of accepting accesses under some conditions (see, Japanese Laid-open Patent Publication No. 2001184264). Also known is a method for distributing a policy in which it is written what type of control is to be performed (Japanese Laid-open Patent Publication No. 2004-166241). Further known is a printer mounted with the aforementioned type of an access control unit (Japanese Laid-open Patent Publication No. 2004-152263).

On the other hand, information processing apparatuses such as image processing apparatuses adapted for connection with a public telephone line or a network each comprise routes to receive electronic documents from external processing apparatuses in various receiving methods (facsimile, e-mail, etc.). Some of these information processing apparatuses have such a function of receiving electronic documents of various data formats through various receiving methods and then accumulating the received electronic documents in a storage device called as a box or transferring the received electronic documents to other computers.

In general, as means for performing the above described selective operation at the time of document reception, rules are set in advance which include information representing senders such as senders' mail addresses and processing operations such as transfer destinations and transfer methods corresponding to respective ones of the information representative of the senders. Via the above described information processing apparatuses, documents are distributed in a computer environment.

In some cases, however, transfer means and transfer method specified in accordance with the rules are not capable of setting access authority for an electronic document due to protocol specifications, even if an access authority has been set for a received electronic document. For example, in the case of facsimile or internet facsimile, access authority cannot be set for an electronic document due to protocol for use in facsimile communication. In that case, a problem is caused that the authority to access the electronic document is lost.

Electronic document formats permitting access authority setting are sometimes limited to particular file formats. In that case, the access authority once set for an electronic document is lost at the destination, if the electronic document has been converted for transfer into a file format such as JPEG or TIFF in which the access authority for electronic document cannot be set.

Therefore, if an electronic document is transferred via the information processing apparatus in a transfer method not intended by a sender or distributed via the information processing apparatus in a format not intended by the sender, an access authority once set by the sender can be lost. In that case, the information processing apparatus can be a security hole.

The EP 1 571 556 A1 discloses a data processing apparatus and a data distributing apparatus. When a portable terminal apparatus which is a data processing apparatus down loads digital contents from a server, the portable terminal apparatus acquires right data which takes into consideration not only contents data but also a first DRM system in this portable terminal apparatus and a second DRM system in a memory card which is the export destination. The portable terminal apparatus handles the contents data according to the right data and converts, when the digital contents are exported to the memory card, the right data so as to be adaptable to the second DRM system and outputs the contents data and converted right data.

The US 2006/0095382 A1 discloses a universal DRM support for devices, which allows a system or client device to process multiple Digital Rights Management (DRM) systems and formats using a universal DRM client. The universal DRM client can operate based on a universal license so that it may use the same DRM scheme or format used by the content provider. A DRM system may then build a universal license that includes information for gaining access to the content in the DRM package. In turn, a DRM package and the universal license may be provided to the universal client. Based on the information in the universal license, the client device can access the protected content even if it does not have the specific client program code for the DRM format used originally by the content provider.

The WO 2004/102459 A1 discloses a method, system and computer program product for transferring encrypted content and a corresponding license that are contained in a first device that uses a first Digital Rights Management (DRM) system of a first or second type to a second device that uses a second DRM system of a first or second type, wherein said encrypted content obeys the content format of said first DRM system; wherein said corresponding license obeys the Rights Expression Language of said first DRM system; wherein one of said devices provides an Application Programming Interface (API) for importing and/or exporting said encrypted content and said corresponding license; and wherein the other device provides an application for transferring said encrypted content and said corresponding license.

### Disclosure of Invention

The present invention provides an information processing apparatus, an information processing method, and an information processing program that are capable of permitting electronic data with access authority to be available at a transfer destination, without the access authority being lost.

According to an aspect of the present invention, there is provided an information processing apparatus as defined in claim 1.

According to a further aspect of the present invention, there is provided an information processing method as defined in claim **5.**

According to a still further aspect of the present invention, there is provided a computer program product as defined in claim **6**.

With the information processing apparatus, the information processing method, and the computer program product, the received electronic data is transferred or the received electronic data is limited from being transferred depending on whether or not the received electronic data is capable of being transferred in a state that it remains set with the access authority. As a result, the electronic data with the access authority can be made available at the transfer destination, without the access authority being lost.

The above and other features and advantages of the present invention will be apparent from the following description taken in conjunction with the accompanying drawings, in which like reference characters designate the same name or similar parts throughout the figures thereof.

### Brief Description of Drawings

FIG. 1 is a view showing the entire construction of an access authority management system that includes an information processing apparatus according to a first embodiment of the present invention:
FIG. 2 is a block diagram showing the internal construction of a copier;
FIG. 3 is a block diagram showing the software construction of a controller unit;
FIG. 4 is a conceptual diagram showing an example of policy data managed by the access authority management server;
FIG. 5 is a conceptual view showing an example of a list of electronic documents managed by the access authority management server;
FIG. 6 is a conceptual diagram showing an example of an electronic document format;
FIG. 7 is a conceptual diagram showing an example of the data structure of rules held by a reception rule section of the controller unit;
FIG. 8 is a view showing an example of a rule registration screen for data registration to the reception rule section;
FIGS. 9A and 9B are a flowchart of a process for transfer of a received electronic document;
FIG. 10 is a view showing an example of text data or TIFF data transmitted in a step S116 or S117 in FIG. 9;
FIG. 11 is a conceptual view showing an example of the data construction of rules held by the reception rule section of the controller unit in a second embodiment of the present invention;
FIG. 12 is a view showing an example of a rule registration screen for data registration to the reception rule section in the second embodiment; and
FIG. 13 is a flowchart showing a process for transfer of a received electronic document in the second embodiment.

### Best Mode for Carrying Out the Invention

In the following, preferred embodiments of the present invention will be described with reference to the appended drawings.

### [First Embodiment]

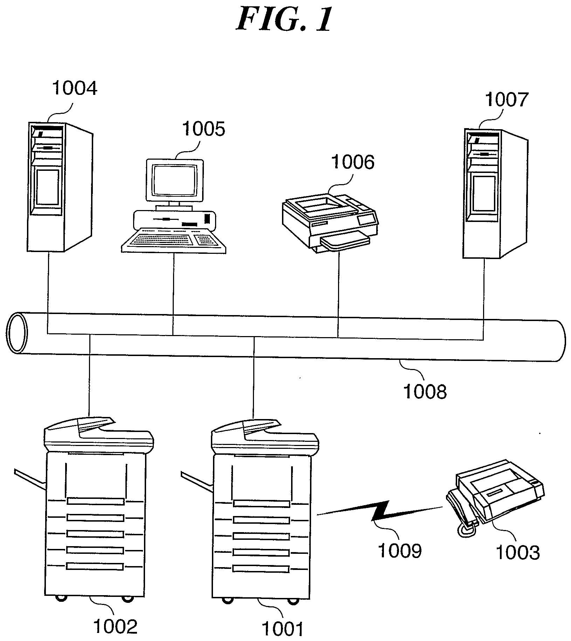

FIG. 1 is a view showing the entire construction of an access authority management system configured to include an information processing apparatus according to a first embodiment of the present invention. As information processing apparatuses, there are provided copiers 1001, 1002 each of which is an image processing apparatus adapted to read an original and transmit data on the read original to various apparatuses. Although the number of copiers in this embodiment is two, there may be provided one copier or more than two copiers.

The copiers 1001, 1002 are connected to an access authority management server 1007 via an Ethernet (registered trademark) 1008, which is a network and to which are connected a database/mail-server 1004, a client computer 1005, and a printer 1006.

A facsimile machine 1003 is connected to the copier 1001 via a public telephone line 1009. The facsimile machine 1003 receives data read by the copier 1001 via the public telephone line 1009 and prints the received data. In the database/mail-server 1004, an application server operates to store data read by the copier 1001 or 1002. The client computer 1005 is capable of downloading and displaying the data stored in the database/mail-server 1004. The printer 1006 is a printing apparatus that prints image data read by the copier 1001 or 1002 and PDL data generated by the client computer 1005. The access authority management server 1007 is a server that manages access authority information on electronic documents.

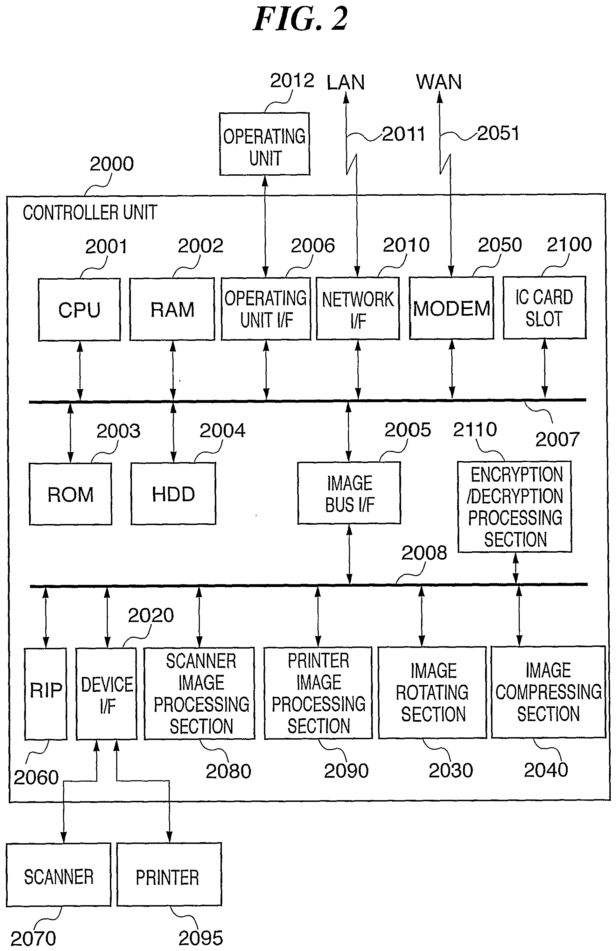

FIG. 2 is a block diagram showing the internal construction of the copier 1001. The copier 1002 has the same construction as that of the copier 1001. In the following, the construction of the copier 1001 will be explained as a representative of both.

The copier 101 includes a controller unit 2000 to which are connected a scanner 2070 and a printer 2095 that are an image input device and an image output device. When the controller unit 2000 is connected with a LAN 2011 or a WAN 2051 which is a public telephone line, image information and device information can be inputted into and outputted from the controller unit 2000.

The controller unit 2000 includes a CPU (an access authority determination device, a transfer eligibility determination device, or a transfer control device) 2001 to which a RAM 2002 is connected via a system bus. Further connected to the CPU 2001 via the system bus 2007 are a ROM 2003, an HDD 2004, an operation unit I/F 2006, a network I/F 2010, a modem 2050, and an IC card slot 2100.

The CPU 2001 is a controller for controlling the entire system. The RAM 2002 is a system work memory for use for operation of the CPU 2001 and is an image memory for temporal storage of image data. The ROM 2003 is a boot ROM in which a boot program for the system is stored. The HDD 2004 is a hard disk drive for storing system software and image data. The operating unit I/F 2006 is an interface with an operating unit 2012 having a touch panel. Image data to be displayed on the operating unit 2012 is outputted thereto via the operating unit IF 2006. Information inputted by a user from the operating unit 2012 to the system is transmitted through the operating unit I/F 2006 to the CPU 2001. A network I/F 2010 is connected to the LAN 2011 for input and output of information. The modem 2050 is connected to the WAN 2051 for input and output of information.

The system bus 2007 is connected to an image bus 2008 via an image bus I/F 2005. The image bus I/F 2005 is a bus bridge through which image data is transferred at high speed between the system bus 2007 and the image bus 2008 and data structure thereof is converted. The image bus 2008 is implemented by a PCI bus or an IEEE 1394 bus.

Connected to the image bus 2008 are an RIP 2060, a device I/F 2020, a scanner image processing section 2080, a printer image processing section 2090, an image rotating section 2030, an image compressing section 2040, and an encryption/decryption processing section 2110.

The RIP 2060 is a raster image processor that expands PDL code into bit map data. The device I/F 2020 is for connecting the controller unit 2000 with the scanner 2070 and a printer 2095 as an image input device and an image output device and for performing synchronous/asynchronous conversion of image data. The scanner image processing section 2080 carries out correction, processing, and editing of the inputted image data. The printer image processing section 2090 carries out printer correction and resolution conversion for print-out image data.

The image rotating section 2030 carries out rotation of image data. The image compressing section 2040 carries out JPEG compression/expansion for multi-valued image data and JBIG, MMR (modified modified read), or MH (modified huffman) for binary image data.

The IC card slot 2100 permits the input/output of an encryption/decryption key when an IC card medium is inserted thereto and then an appropriate PIN (personal identifier number) code is inputted. The encryption/decryption processing section 2110 is a hardware accelerator board that performs encryption/decryption processing using the key inputted to the IC card slot 2100.

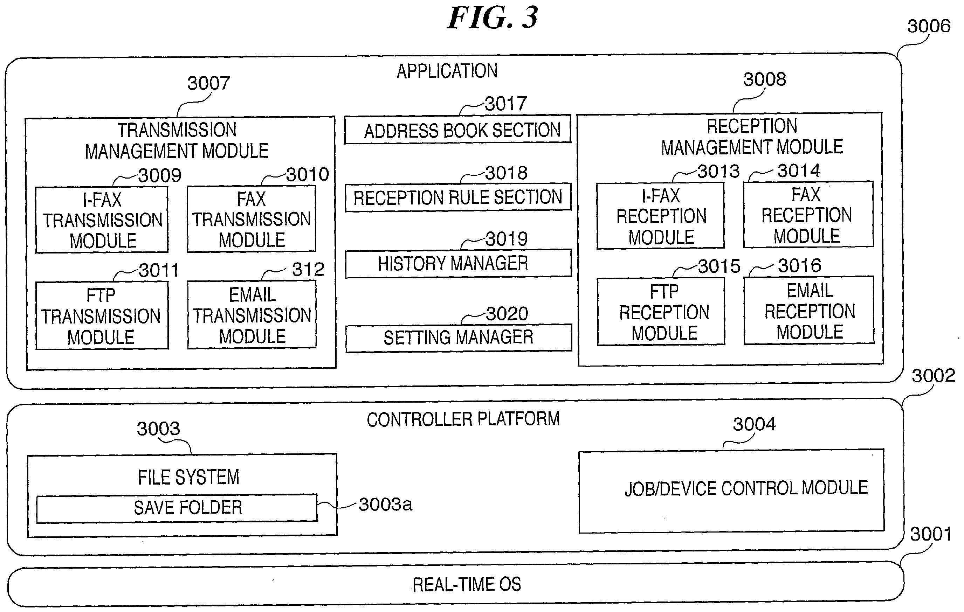

FIG. 3 is a block diagram showing the software configuration of the controller unit 2000.

The software is adapted for being executed by the controller unit 2000 incorporated in the copier 1001 as image processing apparatus. The software is installed as firmware and executed by the CPU 2001 (see FIG. 2). Specifically, the software is comprised of a real time OS 3001, a controller platform 3002, and an application 3006.

The real-time OS 3001 is a real-time operating system and provides software running thereon with various resource management services and frameworks optimized for control of a built-in system. Various resource management services and frameworks provided by the real-time OS 3001 include multitask management (thread management) of substantially parallel-operating a plurality of processes by managing a plurality of execution contexts of processes performed by the CPU 2001, inter-task communication for implementing synchronization and data exchange between tasks, memory management, interrupt management, various device drivers, and protocol stacks implementing various protocol processes for a local interface, network, communication, and the like.

The controller platform 3002 is comprised of a file system 3003 and a job/device control module 3004. The file system 3003 is a mechanism for storing data in a storage device such as the HDD 2004 or the RAM 2002 (see FIG. 2). The file system 3003 is used to spool jobs processed by the controller unit 2000 and save various data. The file system 3003 has a save folder 3003a, which is a storage device. The job/device control module 3004 controls hardware of the copier 1001, and controls a job which uses basic functions (print, scan, communication, image conversion, and the like) provided mainly by hardware of the copier 1001.

The application 3006 is a built-in application for inputting and outputting image or text data via the LAN 2011 or the WAN 2051 (see FIG. 2). At the time of input/output, the application 3006 uses mechanisms provided by the real-time OS 3001 and the controller platform 3002. As a primary mechanism of the application 3006, there can be mentioned a transmission management module 3007 for performing an integrated management of transmission jobs and a reception management module (reception device) 3008 for performing an integrated management of reception jobs.

The transmission management module 3007 includes an I-FAX (internet fax) transmission module 3009, a FAX transmission module 3010, an FTP transmission module 3011, and an email transmission module 3012. The reception management module 3008 includes an I-FAX reception module 3013, a FAX reception module 3014, an FTP reception module 3015, and an email reception module 3016. Each of the transmission management module 3007 and the reception management module 3008 controls various transmission/reception jobs.

Furthermore, as a mechanism for assisting the above described transmission and reception, the application 3006 includes an address book section 3017, a reception rule section (hold device) 3018, a history manager 3019, a setting manager 3020, and the like. The address book section 3017 manages mail addresses and URIs (uniform resource identifiers) as transmission destinations. The reception rule section 3019 manages processing rules for reception. The history manager 3019 manages a history of transmission and reception. The setting manager 3200 manages various setting information.

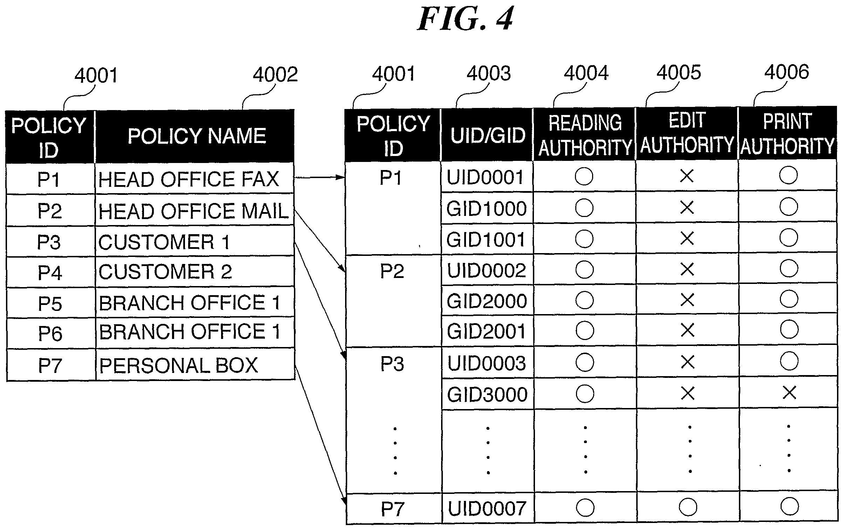

FIG. 4 is a conceptual diagram showing an example of policy data managed by the access authority management server 1007.

The policy data includes policy IDs 4001 to identify respective ones of policies, and policy names 4002 each used by users to identify a corresponding one of the policies. The policy data further includes, as data fields, UID/GID fields 4003 in which are recorded user IDs (to identify individual users) and group IDs (to identify groups each including a plurality of users). As other data fields, there are provided reading authority fields 4004, edit authority fields 4005, and print authority fields 4006 in each of which is indicated the presence/absence of reading authority, edit authority, or print authority of a corresponding one of the user IDs and the group IDs. As shown in FIG. 4, each authority field is marked with a circle mark indicating the presence of authority or a cross mark indicating the absence of authority. For example, in the policy data whose the policy ID 4001 is "P1" and the UID/GID 4003 is "UID0001", it is indicated that a corresponding user has the reading authority and print authority, but does not have the edit authority. With use of such policy data, settings can be made to specify what operations should be permitted to each of users and groups on a policy-by-policy basis.

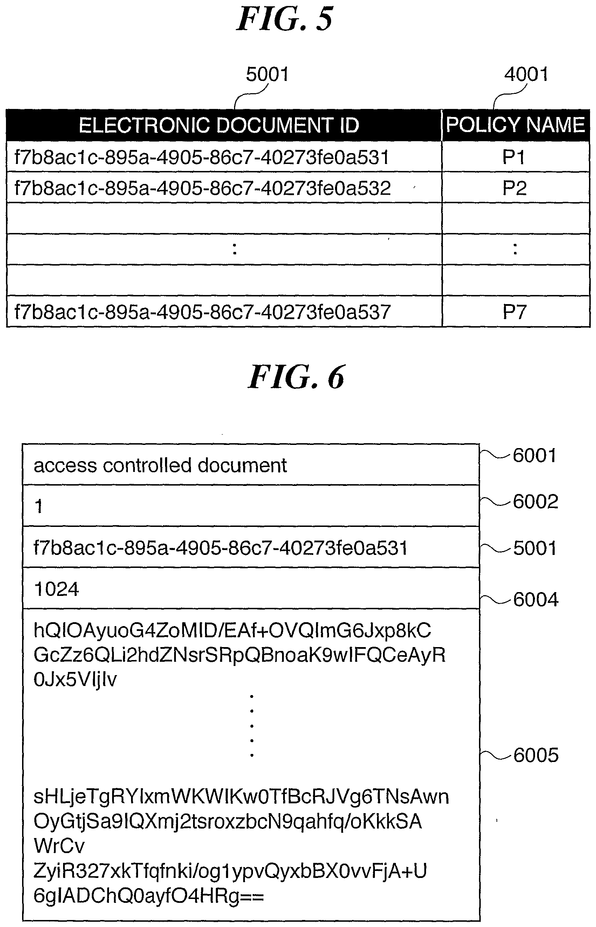

FIG. 5 is a conceptual diagram showing an example of a list of electronic documents managed by the access authority management server 1007. Electronic documents IDs 5001 are identification IDs that are unique to respective ones of the electronic documents. Policy IDs 4001 are made to correspond to respective ones of the electronic document IDs 5001, thereby making it possible to refer to what policy is applied to which electronic document.

FIG. 6 is a conceptual diagram showing an example of an electronic document format. A file header field 6001 contains information to identify an electronic document format, the information being comprised of a particular letter string. A version field 6002 represents a version of the electronic document format. An electronic document ID field 5001 is utilized to specify what policy is to be applied to the electronic document concerned. A data length field 6004 represents the length of data stored in a data body field 6005, which contains document data per se. The document data in the data body field 6005 is encrypted using the encryption key provided by the access authority management server 1007. The electronic document format may include information to access the access authority management server 1007 such as, for example, an IP address or a host name of the access authority management server 1007.

To create a format as shown in FIG. 6, the client computer 1005 sets an access authority for a given electronic document. Specifically, the following procedures are carried out.

First, the client computer 1005 accesses the access authority management server 1007 and specifies a policy ID corresponding to the content of the access authority desired to be provided to the given electronic document.

In response to the access from the client computer 1005, the access authority management server 1007 creates an electronic document ID corresponding to the electronic document, an encryption key for encryption of the electronic document, and a decryption key for decryption of the electronic document. The electronic document ID, the policy ID specified by the client computer 1005, and the decryption key are managed so that they are made to correspond to one another. Then, the electronic document ID and the encryption key are transmitted to the client computer 1005.

The client computer 105 receiving the encryption key and the electronic document ID from the access authority management server 1007 encrypts the electronic document using the received encryption key, and adds the electronic document ID received from the access authority management server to the encrypted electronic document. As a result, the electronic document with access authority is created, which has the format as shown in FIG. 6.

In order that the client computer 1005 performs an operation on the electronic document with access authority (such as to open, edit, or print the document), the following procedures are executed.

First, the client computer 1005 transmits to the access authority management server 1007 the electronic document ID added to the electronic document and the ID (UID or GID) to specify a user or a group who wishes to perform an operation on the electronic document.

The access authority management server 1007, which manages the electronic document IDs and the policy IDs such that they are made to correspond to one another, specifies a policy ID corresponding to the transmitted electronic document ID. Then, the access authority management server 1007 reads information on the authority of the UID or GID defined by the identified policy ID, and transmits to the client computer 1005 the read information together with a decryption key managed so as to correspond to the electronic document ID.

The client computer 1005 decrypts the encrypted data body 6005 part of the electronic document with access authority using the received decryption key, and based on the received access authority information, controls permission/prohibition of the user's operation.

The above described access authority control can similarly be carried out by a different information processing apparatus or the like, not shown, other than the client computer 1005.

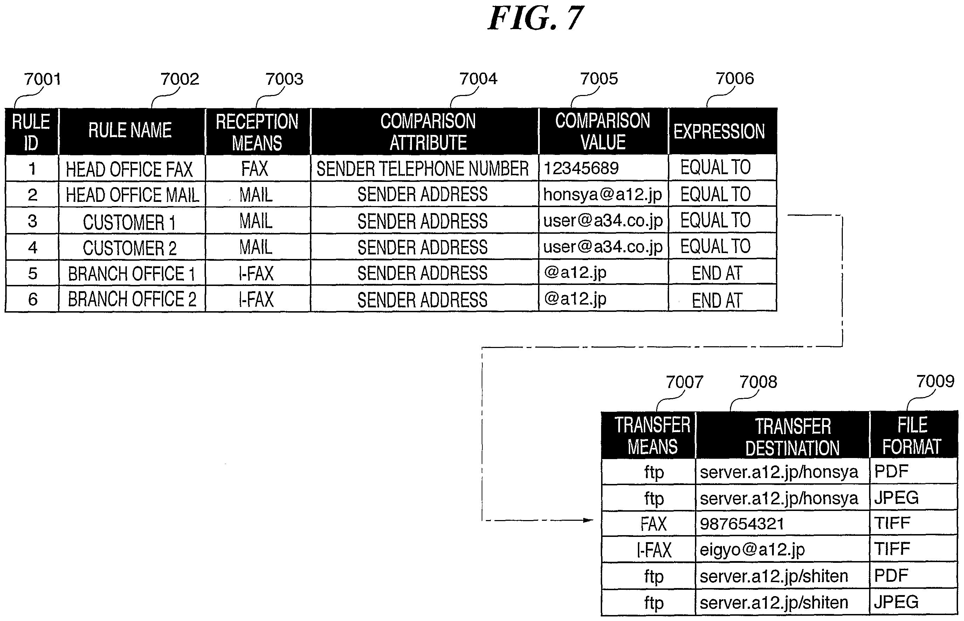

FIG. 7 is a conceptual diagram showing an example of the data structure of rules held by the reception rule section 3018 (see FIG. 3) of the controller unit 2000. Each of the rules specifies a reception condition and a transfer condition. The "reception condition" includes items "rule ID" 7001 to "expression" 7006. The "transfer condition" includes items "transfer means" 7007 to "file format" 7009.

The item "rule ID" 7001 contains identification IDs that are unique to respective ones of the rules and utilized for internal management. The item "rule name" 7002 contains arbitrary names for use by users to identify the rules. The item "reception means" 7003 indicates which reception means is to be used for comparison among a plurality of reception means (or reception methods) such as I-FAX reception, FAX reception, FTP reception, email reception, etc. (refer to the modules 3013 to 3016 in FIG. 3).

The item "comparison attribute" 7004 represents which attribute is to be used for comparison among various attributes such as sender telephone number, sender mail address, etc. included in a received job. A subject (file name or subject of e-mail) of received data can be used as comparison attribute 7004 of reception condition. The item "comparison value" 7005 represents values each of which is to be used for comparison with the attribute of the received job specified in the item "comparison attribute" 7004. The item "expression" 7006 represents a method for comparison of values, which is selected from comparison methods such as "equal to", "ending at " and "starting from".

The item "transfer means" 7007 represents transfer means (or transfer methods) each of which is to be used for electronic document transfer in a case where the received job meets the condition represented by the items "reception means" 7003, "comparison attribute" 7004, "comparison value" 7005, and "expression" 7006. The item "transfer destination" 7008 represents destinations one of which an electronic document is to be transferred to. The item "file format" 7009 represents file formats one of which is to be used for electronic document transfer.

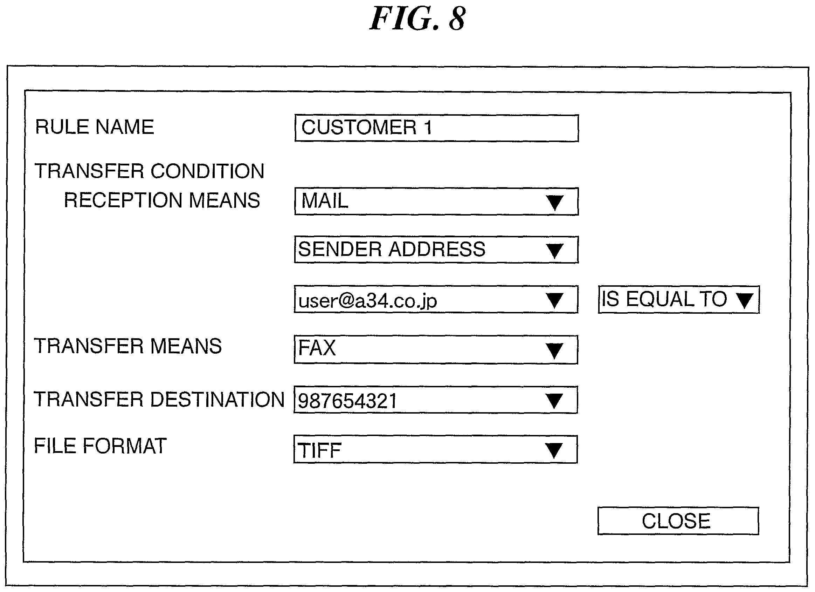

FIG. 8 shows an example of a rule registration screen for data registration to the reception rule section 3018. In the example of rule registration on the rule registration screen shown in FIG. 8, a registration is carried out such that, when an electronic document is received via mail and if the address of a sender of the electronic document is "user@a34.co.jp", then the electronic document is to be transferred via fax in TIFF format to number "987654321". The rule registration screen is displayed on the operating unit 2012 of the copier 1001, for example, and the setting is accepted.

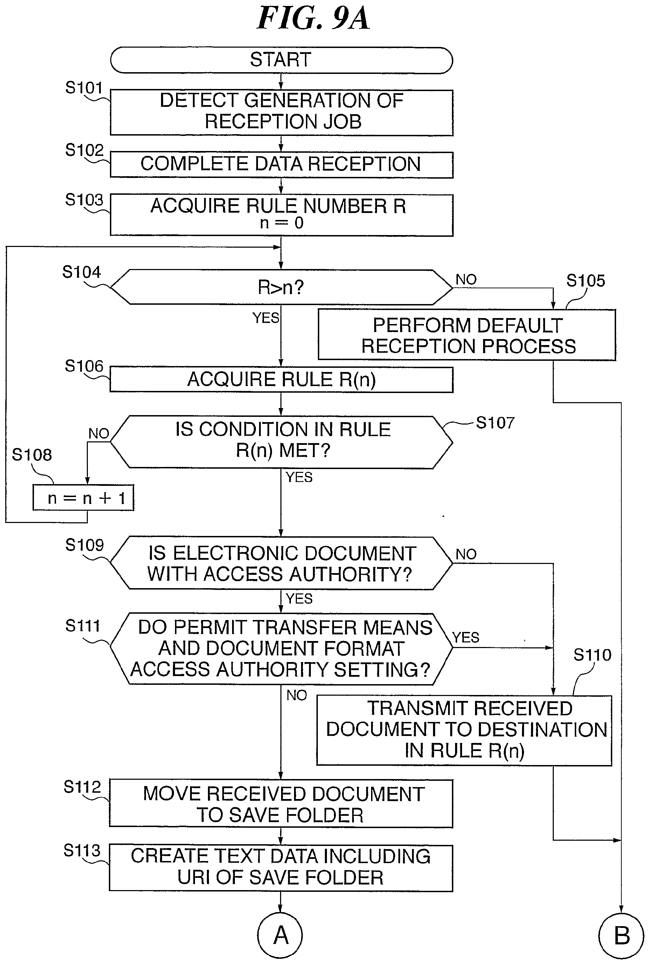

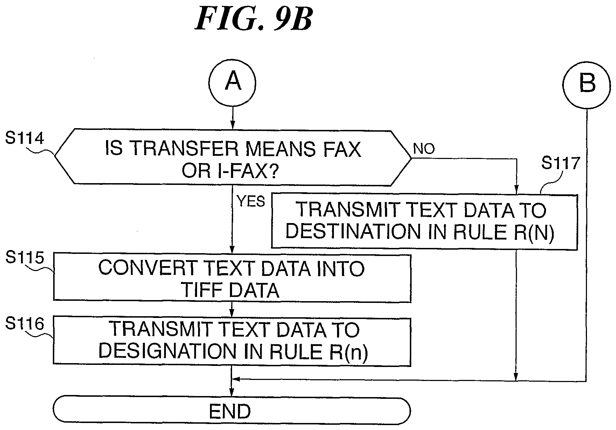

FIGS. 9A and 9B are a flowchart of a process for transfer of a received electronic document. This process is executed by the CPU 2001.

Electronic documents received by the copier 1001 can have various formats. For example, there are formats in which an access authority is set as shown in FIG. 6 and formats in which no access authority is set.

A format set with access authority as shown in FIG. 6 is obtained, if an operation to provide the access authority has been performed in advance by a sender (for example, the client computer 1005 connected to the Ethernet (registered trademark) 1008) from which an electronic document is transmitted to the copier 1001.

In FIGS. 9A and 9B, a generation of a reception job is first detected in a step S101. After data reception (document reception) is completed in a step S102, a registered rule number R representing the number of registered rules (refer to FIG. 7) held by the reception rule section 3018 is acquired and a process counter value n is initialized to zero in a step S103.

Next, it is determined in a step S104 whether or not the registered rule number R is greater than the process counter value n (R>n). If it is determined that the relation of R>n is not satisfied, which indicates that none of the rules registered in the reception rule section 3018 is met, then the process proceeds to a step S105. In the step S105, a default reception process is carried out and then the present process is completed. The default reception process is to perform such as printing or storing in the file system 3003, which is set in advance in the setting manager 3020 (refer to FIG. 3).

On the other hand, if the relation of R>n is satisfied, then a rule R(n) is acquired (step S106). The rule R(n) is the n-th rule (n= 1, 2, 3, ---). Next, whether or not the received job meets the condition specified in the rule R(n) is determined (step S107). If, for example, the received document has been received via fax from a sender telephone number "123456789" and therefore the rule "1" indicated in the item "rule ID" 7001 is satisfied (refer to FIG. 7), then it is determined that the condition in the rule R(n) acquired in the step S106 is met.

If it is determined in the step S107 that the received job does not satisfy the condition in the rule R(n), the process counter value n is incremented by one (step S108), whereupon the process returns to the step S104. On the other hand, if it is determined that the received job satisfies the condition, a determination is made as to whether or not the received electronic document is set with access authority management information (step S109). At this time, the presence/absence of a file header 6001 and a version 6002 in the received electronic document is determined. If such file header and version are attached to the document, it is determined that the received electronic document is set with access authority management information, i.e., the received electronic document is an electronic document with access authority. It should be noted that such determination may be made based on different information and method other than the above described ones so long as they permit execution of a determination to determine whether the access authority management information is set for the electronic document.

If it is determined in the step S109 that no access authority management information is set for the received electronic document, the document is transmitted to a destination specified by the transfer destination 7008 in the rule R(n) (step S110), whereupon the present process is completed. On the other hand, if it is determined that access authority management information is set, the process proceeds to a step S111. In the step S111, it is determined whether or not transfer means 7007 and file format 7009, which are part of the transfer condition in the rule R(n), form such a combination that permit setting of access authority management information. In other words, it is determined whether not the received electronic document is capable of being transferred in a state that it remains set with the access authority management information.

For example, in a case where a file format that permits setting of access authority management information is PDF, the electronic document can be transferred in a state that it remains set with the access authority management information, if the file format 7009 is PDF and if the transfer means 7007 is FTP or email. However, in a case where the file format 7009 is JPEG or TIFF or the transfer means 7007 is FAX or I-FAX, the electronic document cannot be transferred in a state that it remains set with the access authority management information.

If it is determined in the step S111 that the document can be transferred in a state that it remains set with the access authority management information, the process proceeds to the step S110 that transmits the received electronic document to a destination specified by the transfer destination 7008 in the rule R(n) in a state that the received electronic document remains set with the access authority management information. On the other hand, it is determined that the document cannot be transferred in a state that it remains set with the access authority management information, the process proceeds to a step S112. In the step S112, the electronic document is caused to move to the save folder 3003a (refer to FIG. 3) prepared beforehand in the file system 3003. At this time, no alteration is added to the electronic document, and therefore the electronic document is held by the save folder 3003a in a state that it remains set with the access authority management information.

Next, text data is created, which includes a URI as information representing a location of the save folder 3003a (step S113). Then, it is determined whether or not the transfer means 7007 specified in the rule R(n) is FAX or I-FAX (step S114). It should be noted that different information (such as the path of the save folder) other than URI may be used as long as it permits the location of the save folder 3003a to be recognized.

It is determined in the step S114 that the transfer means 7007 is FAX or I-FAX, the text data created in the step S113 is converted into TIFF data (step S115). Then, in a step S116, the TIFF data is transmitted to the destination specified by the transfer destination 7008 in the rule R(n), and the present process is completed.

On the other hand, if it is determined in the step S114 that the transfer means 7007 is not FAX nor I-FAX, the process proceeds to a step S117. In the step S117, the text data created in the step S113 is transmitted to the destination specified by the transfer destination 7008 in the rule R(n), and the present process is completed.

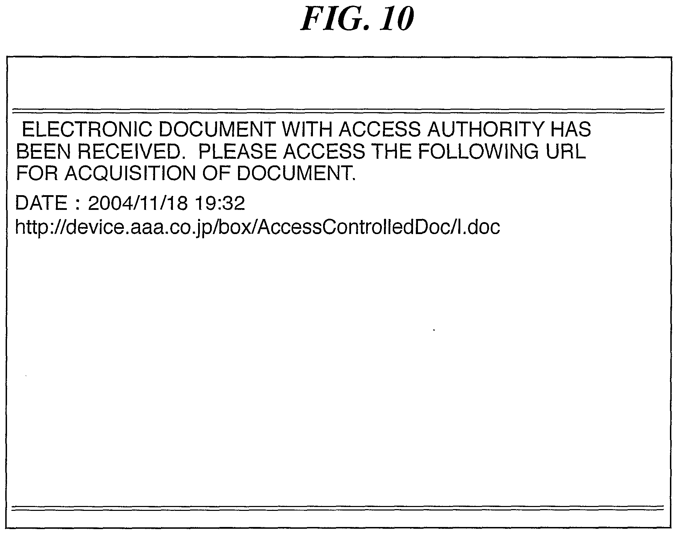

FIG. 10 is a view showing an example of text data or TIFF data transmitted in the step S117 or S116 in FIG. 9B. The data includes information indicating that the electronic document with access authority has been received and indicating a URI allowing access to the electronic document with access authority.

A user receiving the data can know the location of the received electronic document for which access authority management information has been set, and can access the electronic document in a state that the document remains set with access authority.

If whether or not the received electronic document is set with access authority management information cannot be determined in the step S109, then it is uniformly determined that access authority management information is set for the received electronic document. This makes it possible to notify a destination user of the fact that the electronic document, for which whether or not the document is set with access authority has not been determined, has been received and of a method allowing access to the document, whereby the access authority can be prevented from being lost.

According to the present embodiment, in a case where an received electronic document is set with access authority management information, it is determined, referring to the transfer means 7007 and the file format 7009 in the rule R(n), whether or not the received electronic document can be transferred in a state that it remains set with the access authority management information. If it is determined that such document transfer can be carried out, the electronic document is transferred in a state that it remains set with the access authority management information. On the other hand, if it is determined that such document transfer cannot be carried out, the electronic document is saved in the save folder 3003a and text data including a URI indicating the location of the save folder 3003a is created. Subsequently, the text data is transferred, as it is or after being converted into TIFF data, to a destination specified by the transfer destination 7008.

In brief, depending on whether or not a received electronic document can be transferred in a state that it remains set with access authority, the received electronic document is transferred, or information indicating the fact that the received document has been saved and indicating the location where the received document has been saved is transmitted, whereby it is possible to notify a user at the transfer destination of the fact that the electronic document with access authority has been received and of the location of the document. As a result, the document with access authority is made available by the destination user without the access authority being lost.

### [Second Embodiment]

In the first embodiment, in a case where a document cannot be transferred in a state that it remains set with access authority, information indicating the location of the received document is transmitted, instead of the received document itself being transferred. In contrast, a second embodiment changes a transfer destination depending on the presence/absence of access authority.

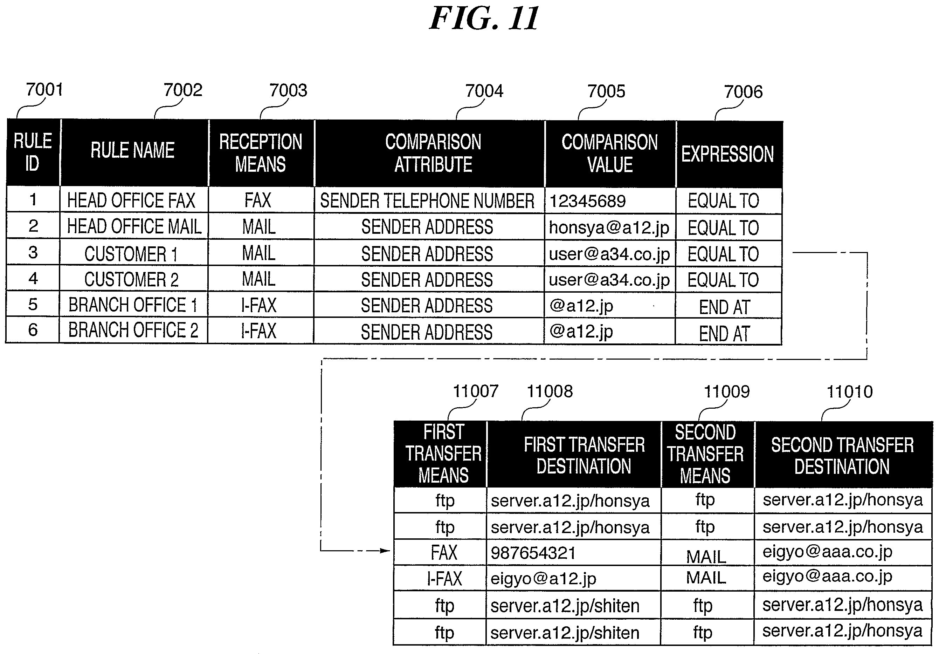

The second embodiment is basically the same as the first embodiment (FIGS. 1 to 6) in the system construction, internal construction of the copier 1001, software construction, policy data, electronic document list, and electronic document format. Thus, explanations on these common parts will be omitted. On the other hand, rules retained by the reception rule section 3018, a rule registration screen, and a transfer process are different from those in the first embodiment. For this reason, the second embodiment will be explained with reference to FIGS. 11 to 13 in place of FIGS. 7 to 9.

FIG. 11 is a conceptual view showing an example of the data structure of rules retained by the reception rule section 3018 of the controller unit 2000 in the second embodiment.

In FIG. 11, a "reception condition" including a rule ID 70001 to an expression 7006 is the same as that shown in FIG. 7. On the other hand, for the transfer condition, first transfer means 11007 and first transfer destination 11008 are registered as a "first transfer condition". Second transfer means 11009 and second transfer destination 11011 are registered as a "second transfer condition".

The first transfer means 11007 corresponds to the reception condition specified by the reception means 7003, comparison attribute 7004, comparison value 7005, and expression 7006, and indicates transfer means used for transfer of documents with no access authority. The first transfer destination 11008 indicates a transfer destination. The second transfer means 11009 is transfer means used for a case where a received job meets the reception condition and used for transfer of documents with access authority. The second transfer destination 11010 indicates a transfer destination. Thus, as the second transfer means 11009, transfer means is set by which a document can be transferred in a state that it remains set with access authority management information. Specifically, the second embodiment is configured to set only either the FTP transmission 3011 or the email transmission 3012 (refer to FIG. 3), as a transfer method in which the second transfer means 11009 is used.

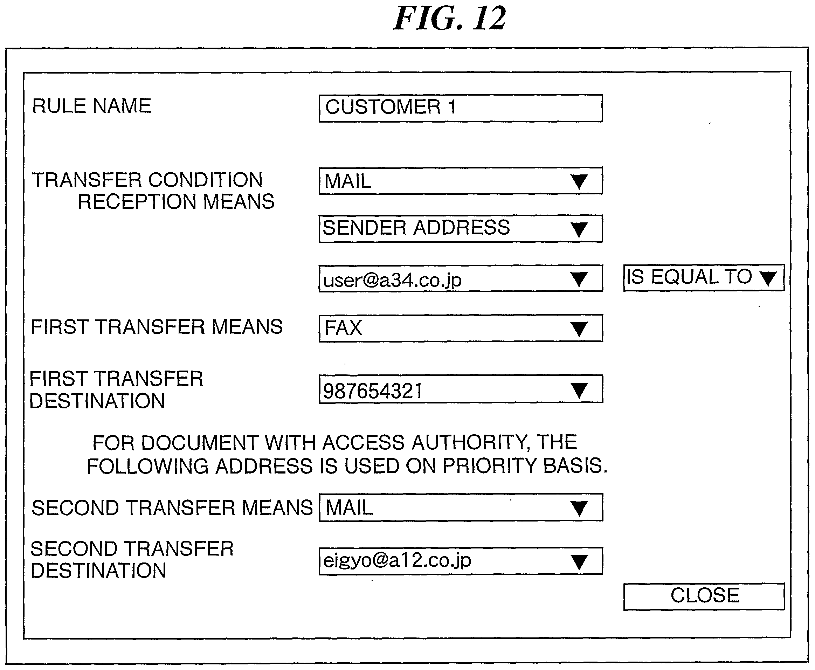

FIG. 12 shows an example of a rule registration screen for data registration to the reception rule section 3018 in the second embodiment.

With the rule registration screen shown in FIG. 12, the data registration is carried out for example as described below. In a case where the address of a sender of an electronic document received via email is "user@a34.co.jp", it is registered that the electronic document is to be transferred via fax to number "987654321" or is to be transferred via email to the destination "eigyo@al2.co.jp". In particular, in the case of a document with access authority, email is specified as the second transfer means, and "eigyo@a12.co.jp" is specified as the second transfer destination.

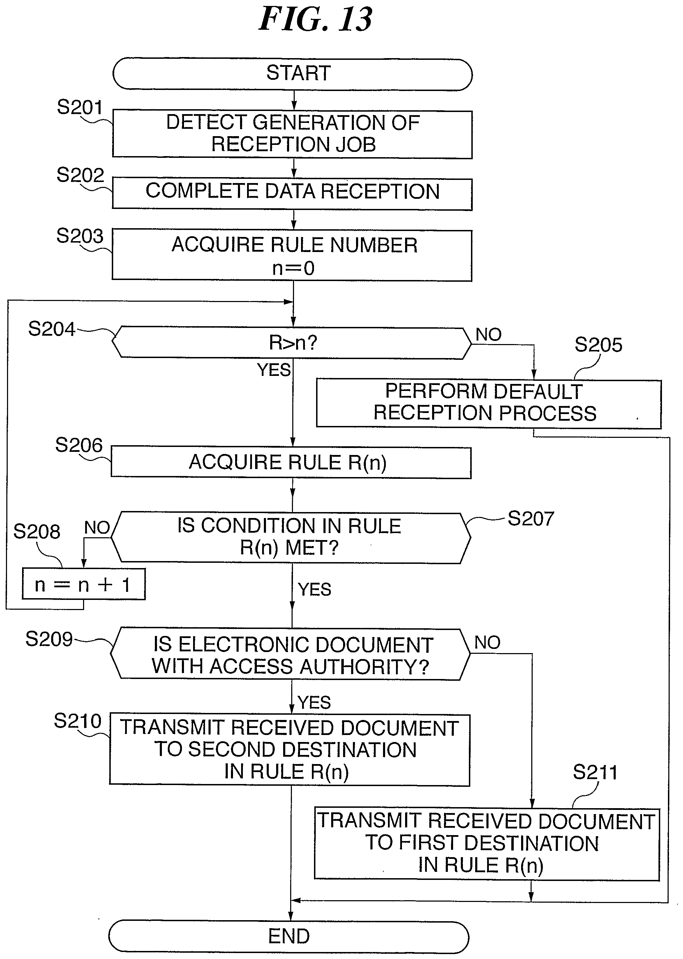

FIG. 13 is a flowchart of a process for transfer of a received electronic document in the second embodiment.

The processing in steps S201 to S208 is the same as or similar to the processing in the steps S101 to S108 in FIG. 9. If it is determined in the step S207 that a received job meets the condition in the rule R(n), it is determined as with the step S109 in FIG. 9A whether or not the received electronic document is set with access authority management information (step S209).

If it is determined in the step S209 that the document is set with no access authority management information (i.e., is not a document with access authority), the received electronic document is transmitted via transfer means specified by the first transfer means 11007 to a destination specified by the first transfer destination 11008 in the rule R(n) (step S211), whereupon the present process is completed.

On the other hand, in the case of access authority management information being set, the received electronic document is transmitted via transfer means specified by the second transfer means 11009 to a destination specified by the second transfer destination 11010 in the rule R(n) (step S210), whereupon the present process is completed.

According to this embodiment, an electronic document with access authority is transferred, on a priority basis, via transfer means specified by the second transfer means 11009 to a destination specified by the second transfer destination. The received document with access authority is made available at a desired transfer destination, without causing the lack of access authority.

In the first and second embodiments, it is enough for the "reception condition" specified in each of the rules (FIG. 7 or 11) held by the reception rule section 3018 includes at least information on a sender. One or more conditions may be added to the reception condition. In the first embodiment, it is enough for the "transfer condition" to include at least information on a transfer method and a transfer destination that correspond to the reception condition. One or more conditions may be added to the transfer condition. On the other hand, in the second embodiment, it is enough for the "transfer condition" to include at least information on a transfer destination corresponding to the reception condition, and one or more conditions may be added to the transfer condition.

In the above, the copiers 1001, 1002 which are image processing apparatuses have exemplarily been described as information processing apparatuses that receive and transfer electronic documents. However, information processing apparatuses to which the present invention is applicable are not limited to the copiers or the like.

In the above, electronic documents have exemplarily been described as electronic data to be received and transferred. However, the present invention is applicable to various electronic data such as images and music files.

It is to be understood that the present invention may be accomplished by supplying a system or an apparatus with a storage medium stored with a program code of software, which realizes the functions of any of the above described embodiments. The present invention may also be accomplished by causing a computer (or CPU, MPU or the like) of the system or the apparatus to read out and execute the program code stored in the storage medium.

In this case, the program code itself read from the storage medium realizes the functions of any of the above described embodiments, and therefore the program code and the storage medium in which the program code is stored constitute the present invention.

Examples of the storage medium for supplying the program code include a floppy (registered trademark) disk, a hard disk, a magnetic-optical disk, an optical disk such as a CD-ROM, a CD-R, a CD-RW, a DVD-ROM, a DVD-RAM, a DVD-RW, or a DVD+RW, a magnetic tape, a nonvolatile memory card, and a ROM. Alternatively, the program may be downloaded via a network.

Further, it is to be understood that the functions of any of the above described embodiments may be accomplished by not only by executing the program code read out by a computer, but also by causing an OS (operating system) or the like which operates on the computer to perform a part or all of the actual operations based on instructions of the program code.

Further, it is to be understood that the functions of any of the above described embodiments may be accomplished by writing a program code read out from the storage medium into a memory provided on an expansion board inserted into a computer or a memory provided in an expansion unit connected to the computer and then causing a CPU or the like provided in the expansion board or the expansion unit to perform a part or all of the actual operations based on instructions of the program code.

As many apparently widely different embodiments of the present invention can be made without departing from the scope thereof, it is to be understood that the invention is not limited to the specific embodiments thereof except as defined in the appended claims.

## Claims

1. An information processing apparatus (1001, 1002) comprising:
a reception unit (3008) adapted to receive electronic data;
a hold unit (3018) adapted to hold transfer conditions, each of the transfer conditions including information representative of a transfer destination (7008) and information representative of a transfer method (7007);
a determination unit (2001) adapted, in a case where an access authority has been set for the received electronic data, to make a determination based on the transfer method (7007) to the transfer destination (7008) represented by the transfer condition as to whether or not the received electronic data is capable of being transferred in a state that it remains set with the access authority; and
a transfer control unit (2001) adapted to transfer the received electronic data in a state that it remains set with the access authority to the transfer destination (7008) represented by the transfer condition in a case where said determination unit (2001) has determined that the received electronic data is capable of being transferred, said transfer control unit (2001) being adapted to limit the received electronic data set with the access authority being transferred to the transfer destination (7008) represented by the transfer condition in a case where said determination unit (2001) has determined that the received electronic data is not capable of being transferred,
**characterized in that**
each of the transfer conditions further includes information representative of a file format (7009) in which the electronic data is to be transferred to the transfer destination (7008), and
said determination unit (2001) is adapted to determine whether or not the received electronic data can be transferred in a state that it remains set with the access authority based on the transfer method and the file format (7009) represented by the transfer condition.

2. The information processing apparatus (1001, 1002) according to claim 1, wherein said transfer control unit (2001) is adapted to store the received electronic data in a storage device (2002, 2004) and transfer information representative of a location of the storage device (2002, 2004) to the transfer destination (7008) represented by the transfer condition in a case where said determination unit (2001) has determined that the received electronic data is not capable of being transferred.

3. The information processing apparatus (1001, 1002) according to claim 1, wherein said hold unit (3018) is further adapted to hold reception conditions (7001 to 7006), each of the reception conditions (7001 to 7006) is made to correspond to an associated one of the transfer conditions, and wherein said determination unit (2001) is adapted to make the determination as to whether or not the received electronic data is capable of being transferred in a state that it remains set with the access authority in a case where the received electronic data meets any of the reception conditions (7001 to 7006).

4. The information processing apparatus (1001, 1002) according to claim 1, wherein the reception conditions (7001 to 7006) each include information representative at least one of a reception method (7003), a sender of transmission (7004, 7005), and a subject of electronic data (7004, 7005).

5. An information processing method comprising:
a reception step (S101, 102) of receiving electronic data;
a hold step of holding transfer conditions, each of the transfer conditions including information representative of a transfer destination (7008) and information representative of a transfer method;
a determination step (S111) of making, in a case (S109=YES) where an access authority has been set for the received electronic data, a determination based on the transfer method (7007) to the transfer destination (7008) represented by the transfer condition as to whether or not the received electronic data is capable of being transferred in a state that it remains set with the access authority; and
a transfer control step of transferring (S110) the received electronic data in a state that it remains set with the access authority to the transfer destination (7008) represented by the transfer condition in a case (S111=YES) where the determination step has determined that the received electronic data is capable of being transferred, and limiting (S112) the received electronic data set with the access authority being transferred to the transfer destination (7008) represented by the transfer condition in a case (S111=NO) where said determination step has determined that the received electronic data is not capable of being transferred,
**characterized in that**
each of the transfer conditions further includes information representative of a file format (7009) in which the electronic data is to be transferred to the transfer destination (7008), and
in said determination step it is determined whether or not the received electronic data can be transferred in a state that it remains set with the access authority based on the transfer method and the file format (7009) represented by the transfer condition.

6. A computer program product including a program for a processing device, comprising software code portions for performing the steps of claim 5 when the program is run on the processing device.

7. The computer program product according to claim 6, wherein the computer program product comprises a computer-readable medium on which the software code portions are stored, wherein the program is directly loadable into an internal memory of the processing device.

## Patentansprüche

1. Informationsverarbeitungsvorrichtung (1001, 1002) mit
einer Empfangseinheit (3008) zum Empfangen elektronischer Daten,
einer Halteeinheit (3018) zum Halten von Transferbedingungen, wobei die Transferbedingungen jeweils ein Transferziel (7008) darstellende Informationen und ein Transferverfahren (7007) darstellende Informationen enthalten,
einer Bestimmungseinheit (2001), die in einem Fall, in dem eine Zugangsberechtigung für die empfangenen elektronischen Daten eingestellt wurde, zum Durchführen einer Bestimmung beruhend auf dem Transferverfahren (7007) zu dem Transferziel (7008), die durch die Transferbedingung dargestellt sind, dahingehend eingerichtet ist, ob die empfangenen elektronischen Daten in einem Zustand übertragen werden können oder nicht, dass sie mit eingestellter Zugangsberechtigung verbleiben, und
einer Transfersteuereinheit (2001) zum Übertragen der empfangenen elektronischen Daten in einem Zustand, dass sie mit eingestellter Zugangsberechtigung verbleiben, zu dem durch die Transferbedingung dargestellten Transferziel (7008) in einem Fall, in dem die Bestimmungseinheit (2001) bestimmt hat, dass die empfangenen elektronischen Daten übertragen werden können, wobei die Transfersteuereinheit (2001) zum Begrenzen der empfangenen elektronischen Daten mit eingestellter Zugangsberechtigung, die die zu dem durch die Transferbedingung dargestellten Transferziel (7008) übertragen werden, in einem Fall eingerichtet ist, in dem die Bestimmungseinheit (2001) bestimmt hat, dass die empfangenen elektronischen Daten nicht übertragen werden können,
**dadurch gekennzeichnet, dass**
die Transferbedingungen jeweils ein Dateiformat (7009) darstellende Informationen enthalten, in dem die elektronischen Daten zu dem Transferziel (7008) zu übertragen sind, und
die Bestimmungseinheit (2001) zur Bestimmung beruhend auf dem Transferverfahren und dem Dateiformat (7009), die durch die Transferbedingung dargestellt sind, eingerichtet ist, ob die empfangenen elektronischen Daten in einem Zustand übertragen werden können oder nicht, dass sie mit eingestellter Zugangsberechtigung verbleiben.

2. Informationsverarbeitungsvorrichtung (1001, 1002) nach Anspruch 1, wobei die Transfersteuereinheit (2001) zur Speicherung der empfangenen elektronischen Daten in einer Speichereinrichtung (2002, 2004) und zur Übertragung von einen Ort der Speichereinrichtung (2002, 2004) darstellenden Informationen zu dem durch die Transferbedingung dargestellten Transferziel (7008) in einem Fall eingerichtet ist, in dem die Bestimmungseinheit (2001) bestimmt hat, dass die empfangenen elektronischen Daten nicht übertragen werden können.

3. Informationsverarbeitungsvorrichtung (1001, 1002) nach Anspruch 1, wobei die Halteeinheit (3018) ferner zum Halten von Empfangsbedingungen (7001 bis 7006) eingerichtet ist, wobei die Empfangsbedingungen (7001 bis 7006) jeweils zum Entsprechen einer assoziierten der Transferbedingungen veranlasst sind, und wobei die Bestimmungseinheit (2001) zum Durchführen der Bestimmung, ob die empfangenen elektronischen Daten in einem Zustand übertragen werden können oder nicht, dass sie mit eingestellter Zugangsberechtigung verbleiben, in einem Fall eingerichtet ist, in dem die empfangenen elektronischen Daten eine beliebige der Empfangsbedingungen (7001 bis 7006) erfüllen.

4. Informationsverarbeitungsvorrichtung (1001, 1002) nach Anspruch 1, wobei die Empfangsbedingungen (7001 bis 7006) jeweils Informationen enthalten, die ein Empfangsverfahren (7003) und/oder einen Sender der Übertragung (7004, 7005) und/oder ein Subjekt elektronischer Daten (7004, 7005) darstellen.

5. Informationsverarbeitungsverfahren mit
einem Empfangsschritt (S101, 102) eines Empfangens elektronischer Daten,
einem Halteschritt eines Haltens von Transferbedingungen, wobei die Transferbedingungen jeweils ein Transferziel (7008) darstellende Informationen und ein Transferverfahren darstellende Informationen enthalten,
einem Bestimmungsschritt (S111) eines Durchführens einer Bestimmung beruhend auf dem Transferverfahren (7007) zu dem Transferziel (7008), die durch die Transferbedingung dargestellt sind, in einem Fall (S109=JA), in dem eine Zugangsberechtigung für die empfangenen elektronischen Daten eingestellt wurde, ob die empfangenen elektronischen Daten in einem Zustand übertragen werden können oder nicht, dass sie mit eingestellter Zugangsberechtigung verbleiben, und
einem Transfersteuerschritt eines Übertragens (S110) der empfangenen elektronischen Daten in einem Zustand, dass sie mit eingestellter Zugangsberechtigung verbleiben, zu dem durch die Transferbedingung dargestellten Transferziel (7008) in einem Fall (S111=JA), in dem der Bestimmungsschritt bestimmt hat, dass die empfangenen elektronischen Daten übertragen werden können, und eines Begrenzens (S112) der empfangenen elektronischen Daten mit eingestellter Zugangsberechtigung, die zu dem durch die Transferbedingung dargestellten Transferziel (7008) übertragen werden, in einem Fall (S111=NEIN), in dem der Bestimmungsschritt bestimmt hat, dass die empfangenen elektronischen Daten nicht übertragen werden können,
**dadurch gekennzeichnet, dass**
die Transferbedingungen jeweils ein Dateiformat (7009) darstellende Informationen enthalten, in dem die elektronischen Daten zu dem Transferziel (7008) zu übertragen sind, und
in dem Bestimmungsschritt beruhend auf dem Transferverfahren und dem Dateiformat (7009), die durch die Transferbedingung dargestellt sind, bestimmt wird, ob die empfangenen elektronischen Daten in einem Zustand übertragen werden können oder nicht, dass sie mit eingestellter Zugangsberechtigung verbleiben.

6. Computerprogrammprodukt mit einem Programm für eine Verarbeitungseinrichtung, das Softwarecodeabschnitte zur Durchführung der Schritte von Anspruch 5 umfasst, wenn das Programm auf der Verarbeitungseinrichtung läuft.

7. Computerprogrammprodukt nach Anspruch 6, wobei das Computerprogrammprodukt ein computerlesbares Medium umfasst, auf dem die Softwarecodeabschnitte gespeichert sind, wobei das Programm direkt in einen internen Speicher der Verarbeitungseinrichtung ladbar ist.

## Revendications

1. Appareil de traitement d'informations (1001, 1002), comprenant :
une unité de réception (3008) adaptée pour recevoir des données électroniques ;
une unité de maintien (3018) adaptée pour maintenir des conditions de transfert, chacune des conditions de transfert comportant des informations représentant une destination de transfert (7008) et des informations représentant un procédé de transfert (7007) ;
une unité de détermination (2001) adaptée, dans le cas où une autorisation d'accès a été établie pour les données électroniques reçues, pour déterminer, sur la base du procédé de transfert (7007) à la destination de transfert (7008) représentée par la condition de transfert, si les données électroniques reçues sont susceptibles d'être transférées ou non dans un état où l'autorisation d'accès est conservée pour celles-ci ; et
une unité de commande de transfert (2001) adaptée pour transférer les données électroniques reçues dans un état où l'autorisation d'accès est conservée pour celles-ci à la destination de transfert (7008) représentée par la condition de transfert dans le cas où ladite unité de détermination (2001) a déterminé que les données électroniques reçues sont susceptibles d'être transférées, ladite unité de commande de transfert (2001) étant adaptée pour limiter les données électroniques reçues auxquelles l'autorisation d'accès est établie, qui sont transférées à la destination de transfert (7008) représentée par la condition de transfert dans le cas où ladite unité de détermination (2001) a déterminé que les données électroniques reçues ne sont pas susceptibles d'être transférées,
**caractérisé en ce que**
chacune des conditions de transfert comporte en outre des informations représentant un format de fichier (7009) dans lequel les données électroniques doivent être transférées à la destination de transfert (7008), et
ladite unité de détermination (2001) est adaptée pour déterminer si les données électroniques reçues peuvent être transférées ou non dans un état où l'autorisation d'accès est conservée pour celles-ci sur la base du procédé de transfert et du format de fichier (7009) représenté par la condition de transfert.

2. Appareil de traitement d'informations (1001, 1002) selon la revendication 1, dans lequel ladite unité de commande de transfert (2001) est adaptée pour stocker les données électroniques reçues dans un dispositif de stockage (2002, 2004) et transférer des informations représentant un emplacement du dispositif de stockage (2002, 2004) à la destination de transfert (7008) représentée par la condition de transfert dans le cas où ladite unité de détermination (2001) a déterminé que les données électroniques reçues ne sont pas susceptibles d'être transférées.

3. Appareil de traitement d'informations (1001, 1002) selon la revendication 1, dans lequel ladite unité de maintien (3018) est en outre adaptée pour maintenir des conditions de réception (7001 à 7006), chacune des conditions de réception (7001 à 7006) est mise en correspondance avec une condition associée des conditions de transfert, et dans lequel ladite unité de détermination (2001) est adaptée pour déterminer si les données électroniques reçues sont susceptibles d'être transférées ou non dans un état où l'autorisation d'accès est conservée pour celles-ci dans le cas où les données électroniques reçues satisfont l'une des conditions de réception (7001 à 7006).

4. Appareil de traitement d'informations (1001, 1002) selon la revendication 1, dans lequel les conditions de réception (7001 à 7006) comportent chacune des informations représentant au moins l'un parmi un procédé de réception (7003), un expéditeur de transmission (7004, 7005), et un sujet de données électroniques (7004, 7005).

5. Procédé de traitement d'informations comprenant :
une étape de réception (S101, 102) consistant à recevoir des données électroniques ;
une étape de maintien consistant à maintenir des conditions de transfert, chacune des conditions de transfert comportant des informations représentant une destination de transfert (7008) et des informations représentant un procédé de transfert ;
une étape de détermination (S111) consistant à déterminer, dans le cas (S109 = OUI) où une autorisation d'accès a été établie pour les données électroniques reçues, sur la base du procédé de transfert (7007) à la destination de transfert (7008) représentée par la condition de transfert, si les données électroniques reçues sont susceptibles d'être transférées ou non dans un état où l'autorisation d'accès est conservée pour celles-ci ; et
une étape de commande de transfert (S110) consistant à transférer les données électroniques reçues, dans un état où l'autorisation d'accès est conservée pour celles-ci, à la destination de transfert (7008) représentée par la condition de transfert dans le cas (S111 = OUI) où l'étape de détermination a déterminé que les données électroniques reçues sont susceptibles d'être transférées, et à limiter (S112) les données électroniques reçues auxquelles l'autorisation d'accès est établie qui sont transférées à la destination de transfert (7008) représentée par la condition de transfert dans le cas (S111 = NON) où ladite étape de détermination a déterminé que les données électroniques reçues ne sont pas susceptibles d'être transférées,
**caractérisé en ce que**
chacune des conditions de transfert comporte en outre des informations représentant un format de fichier (7009) dans lequel les données électroniques doivent être transférées à la destination de transfert (7008), et
dans ladite étape de détermination, on détermine si les données électroniques reçues peuvent être transférées ou non dans un état où l'autorisation d'accès est conservée pour celles-ci sur la base du procédé de transfert et du format de fichier (7009) représenté par la condition de transfert.

6. Produit de programme informatique comportant un programme pour un dispositif de traitement, comprenant des parties de code logiciel pour mettre en oeuvre les étapes de la revendication 5 lorsque le programme est exécuté sur le dispositif de traitement.

7. Produit de programme informatique selon la revendication 6, dans lequel le produit de programme informatique comprend un support lisible par ordinateur sur lequel les parties de code logiciel sont stockées, dans lequel le programme peut être chargé directement dans une mémoire interne du dispositif de traitement.
